# EUROPÄISCHE PATENTSCHRIFT

(11) **EP 3 993 938 B1**
(45) Veröffentlichungstag und Bekanntmachung des Hinweises auf die Patenterteilung: **18.12.2024**
(21) Anmeldenummer: 20733424.4
(22) Anmeldetag: 17.06.2020
(51) Int. Cl.: B23D 61/02, B23D 61/18

(54) **ZERSPANUNGSWERKZEUG MIT ASYMMETRISCHEN ZÄHNEN MIT SCHNEIDPARTIKELN**
MACHINING TOOL HAVING ASYMMETRICAL TEETH HAVING CUTTING PARTICLES
OUTIL D'USINAGE PAR ENLÈVEMENT DE COPEAUX À DENTS ASYMÉTRIQUES MUNIES DE PARTICULES DE COUPE

(30) Priorität: 02.07.2019 DE 102019117799
(43) Veröffentlichungstag der Anmeldung: 11.05.2022
(73) Patentinhaber: WIKUS-Sägenfabrik Wilhelm H. Kullmann GmbH & Co. KG, 34286 Spangenberg (DE)
(72) Erfinder: KULLMANN, Jörg H., 34286 Spangenberg (DE)
(74) Vertreter: REHBERG HÜPPE + PARTNER
(86) Internationale Anmeldenummer: PCT/EP2020/066756
(87) Internationale Veröffentlichungsnummer: WO 2021/001150

(56) Entgegenhaltungen:
- EP-A1- 1 663 579
- WO-A1-2008/119299
- CN-A- 106 625 304
- DD-A5- 293 300
- DE-T2- 69 700 910
- KR-Y1- 200 164 555
- US-A1- 2003 209 125

## Beschreibung

### TECHNISCHES GEBIET DER ERFINDUNG

Die Erfindung betrifft ein Zerspanungswerkzeug mit einem Zahn mit einer Zahnspitze, die zur Bildung einer Mehrzahl geometrisch unbestimmter Schneiden mit Schneidpartikeln belegt ist. Bei dem Zerspanungswerkzeug handelt es sich um ein Sägeband oder Sägeblatt.

Derartige Zerspanungswerkzeuge mit geometrisch unbestimmten Schneiden werden im Unterschied zu Sägeblättern mit geometrisch bestimmten Schneiden häufig nicht zum Zerspanen bzw. Sägen von Metall, sondern von anderen Werkstoffen - wie insbesondere Glas, Graphit, Hartbrandkohle, Keramik, Silicium, Betonwerkstoffen, CFK, gesinterten Werkstoffen und Natursteinen - eingesetzt.

### STAND DER TECHNIK

Ein Schleifschneidwerkzeug mit einem Zahn mit einer Zahnspitze, die zur Bildung einer Mehrzahl geometrisch unbestimmter Schneiden mit Schneidpartikeln belegt ist, ist aus dem deutschen Patent DE 697 00 910 T2 bekannt. Die Zahnspitze weist eine Längsmittelachse, eine Plateaufläche, eine erste Anschlussfläche und eine zweite Anschlussfläche auf. Die erste Anschlussfläche und die zweite Anschlussfläche schließt direkt an die Plateaufläche an. Bei der in Fig. 8 dargestellten Ausführungsform ist die Zahnspitze asymmetrisch ausgebildet. DE 69700910 T2 offenbart ein Zerspanungswerkzeug gemäß dem Oberbegriff des Anspruchs 1.

Ein Zerspanungswerkzeug mit integriertem Schmiermittel ist aus der deutschen Patentanmeldung DE 10 2010 062 073 A1 bekannt.

Ein Verfahren zur Herstellung eines Schleifwerkzeugs ist aus der europäischen Patentanmeldung EP 0 569 770 A1 bekannt.

Ein Zerspanungswerkzeug zum Zerspanen von zwei verschiedenen Werkstoffen ist aus der USamerikanischen Patentanmeldung US 2017/0189977 A1 bekannt.

Ein Zerspanungswerkzeug mit einem Zahn mit einer Zahnspitze, die zur Bildung einer Mehrzahl geometrisch unbestimmter Schneiden mit Schneidpartikeln belegt ist, ist als Sägeband der Marke "DIAGRIT" der Anmelderin beispielsweise aus dem Katalog "PRÄZISIONS-SÄGEBÄNDER", Ausgabe 2017, Seite 41 der Anmelderin bekannt. Die Zahnspitze weist jeweils eine Längsmittelachse, eine Plateaufläche, eine erste Anschlussfläche und eine zweite Anschlussfläche auf. Die erste Anschlussfläche und die zweite Anschlussfläche schließen direkt an die Plateaufläche an. Beide Anschlussflächen verlaufen auf ihrer jeweiligen Seite der Längsmittelachse unter dem betragsmäßig gleichen Zahnspitzwinkel zur Plateaufläche. Der Zahnspitzwinkel beträgt dabei etwa 0°, d. h. die Anschlussfläche verläuft in etwa parallel zu der Längsmittelachse der Zahnspitze.

Weiterer Stand der Technik ist aus den Druckschriften WO 2008/119299 A1, US 2003/209125 A1, CN 106 625 304 A, DD 293 300 A5, KR 200 164 555 Y1, EP 1 663 579 A1 und DE 697 00 910 T2 bekannt.

### AUFGABE DER ERFINDUNG

Der Erfindung liegt die Aufgabe zugrunde, ein als Sägeband oder Sägeblatt ausgebildetes Zerspanungswerkzeug bereitzustellen, mit dem Werkstücke aus unterschiedlichen Werkstoffen effizient zerspant werden können.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft ein als Sägeband oder Sägeblatt ausgebildetes Zerspanungswerkzeug mit einem Zahn mit einer Zahnspitze, die zur Bildung einer Mehrzahl geometrisch unbestimmter Schneiden mit Schneidpartikeln belegt ist. Die Zahnspitze ist asymmetrisch ausgebildet.

Die Erfindung betrifft weiterhin ein Verfahren zum Zerspanen von zwei Werkstücken aus unterschiedlichen Werkstoffen mit genau einem Zerspanungswerkzeug mit einem Zahn mit einer asymmetrisch ausgebildeten Zahnspitze, die zur Bildung einer Mehrzahl geometrisch unbestimmter Schneiden mit Schneidpartikeln belegt ist. Das Zerspanungswerkzeug wird in einer ersten Orientierung in eine Zerspanungsmaschine mit einem Motor eingesetzt. Dann wird ein erstes Werkstück aus einem ersten Werkstoff mit dem Zerspanungswerkzeug in der ersten Orientierung durch Antreiben des Zerspanungswerkzeugs in einem ersten Bewegungsrichtungssinn zerspant.

Danach wird gemäß einer ersten Alternative a der Motor zum Antreiben des Zerspanungswerkzeugs in einem entgegensetzen zweiten Bewegungsrichtungssinn umgeschaltet und dann ein zweites Werkstück aus einem anderen zweiten Werkstoff mit dem Zerspanungswerkzeug in der ersten Orientierung zerspant.

Gemäß einer zweiten Alternative b wird stattdessen das Zerspanungswerkzeug aus der Zerspanungsmaschine entnommen und das Zerspanungswerkzeug in einer entgegengesetzten zweiten Orientierung in die Zerspanungsmaschine eingesetzt. Danach wird ein zweites Werkstück aus einem anderen zweiten Werkstoff mit dem Zerspanungswerkzeug in der zweiten Orientierung durch Antreiben des Zerspanungswerkzeugs in dem ersten Bewegungsrichtungssinn zerspant.

### Definitionen

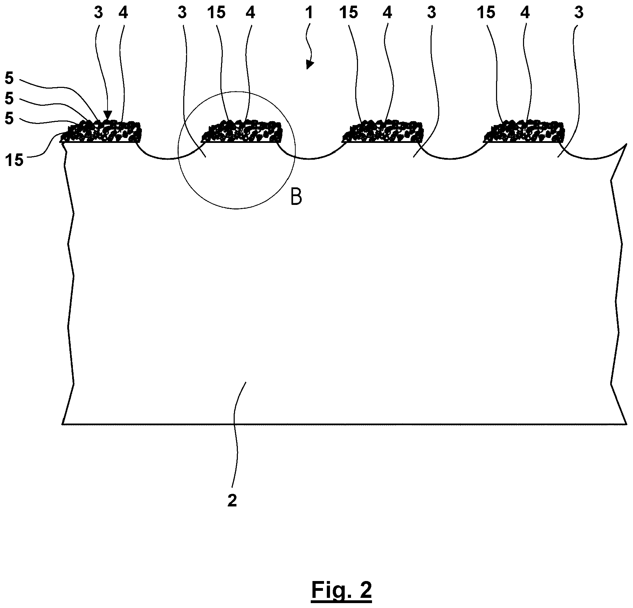

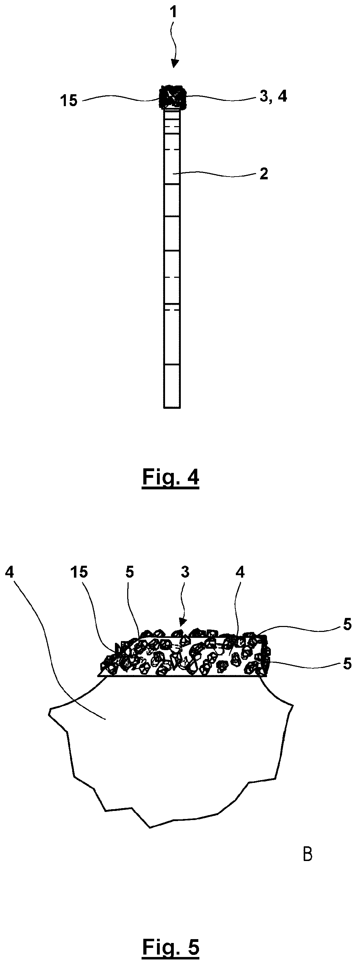

Das Merkmal der asymmetrischen Ausbildung der Zahnspitze ist so zu verstehen, dass die Zahnspitze bezüglich ihrer Grundgeometrie ohne Berücksichtigung der Schneidpartikel asymmetrisch ausgebildet ist. Die Zahnspitze ist in einer Haupterstreckungsebene des Zerspanungswerkzeugs asymmetrisch ausgebildet. Die Haupterstreckungsebene des Zerspanungswerkzeugs entspricht dabei z. B. der Zeichenebene der Fig. 2 und 5. Die Bewegungsrichtung des Zerspanungswerkzeugs und die Höhe des Zahns liegen in der Haupterstreckungsebene. In der Haupterstreckungsebene ist auch eine Längsmittelachse der Zahnspitze angeordnet, die sich bei einem bandförmigen Grundkörper senkrecht zur Bewegungsrichtung des Zerspanungswerkzeugs erstreckt.

Die asymmetrische Zahnspitze ist also so ausgebildet, dass sie auf einer ersten Seite der Längsmittelachse anders ausgebildet ist als auf einer entgegengesetzten zweiten Seite der Längsmittelachse.

Anders gesagt ist die Zahnspitze in einer Seitenansicht in der Bewegungsrichtung des Zerspanungswerkzeugs gesehen derart asymmetrisch ausgebildet, dass der Betrag des Winkels der ersten Fläche der Zahnspitze, die beim Zerspanen in einem ersten Bewegungsrichtungssinn des Zerspanungswerkzeugs zuerst mit dem Werkstück in Kontakt kommt, ungleich dem Betrag des Winkels der zweiten Fläche der Zahnspitze, die beim Zerspanen in einem entgegengesetzten zweiten Bewegungsrichtungssinn des Zerspanungswerkzeugs zuerst mit dem Werkstück in Kontakt kommt.

Die Zahnspitze weist eine Längsmittelachse, eine Plateaufläche, eine erste Anschlussfläche und eine zweite Anschlussfläche auf. Die erste Anschlussfläche und die zweite Anschlussfläche schließen direkt oder indirekt an die Plateaufläche an. Die erste Anschlussfläche verläuft auf einer ersten Seite der Längsmittelachse unter einem ersten Zahnspitzwinkel mit einem ersten Betrag zur Plateaufläche. Die zweite Anschlussfläche verläuft auf einer entgegengesetzten zweiten Seite der Längsmittelachse unter einem zweiten Zahnspitzwinkel mit einem anderen zweiten Betrag zur Plateaufläche. Die Zahnspitzwinkel unterscheiden sich betragsmäßig, wodurch die Zahnspitze asymmetrisch ausgebildet ist.

Die in der Bewegungsrichtung des Zerspanungswerkzeugs gesehen vorangehende Anschlussfläche entspricht bezüglich ihrer Anordnung der Spanfläche der Zahnspitze eines Sägeblatts. Die in der Bewegungsrichtung des Zerspanungswerkzeugs gesehen nachfolgende Anschlussfläche entspricht bezüglich ihrer Anordnung der Freifläche der Zahnspitze eines Sägeblatts. Wenn der Bewegungsrichtungssinn oder die Orientierung des Zerspanungswerkzeugs umgekehrt wird, kehrt sich auch die Funktionalität der Anschlussflächen entsprechend um.

Der Zahnspitzwinkel der in der Bewegungsrichtung des Zerspanungswerkzeugs gesehen vorangehenden Anschlussfläche entspricht bezüglich ihrer Anordnung dem Spanwinkel der Zahnspitze eines Sägeblatts. Der Zahnspitzwinkel der in der Bewegungsrichtung des Zerspanungswerkzeugs gesehen nachfolgenden Anschlussfläche entspricht bezüglich ihrer Anordnung dem Freiwinkel der Zahnspitze eines Sägeblatts. Wenn der Bewegungsrichtungssinn oder die Orientierung des Zerspanungswerkzeugs umgekehrt wird, kehrt sich auch die Funktionalität der Zahnspitzwinkel entsprechend um.

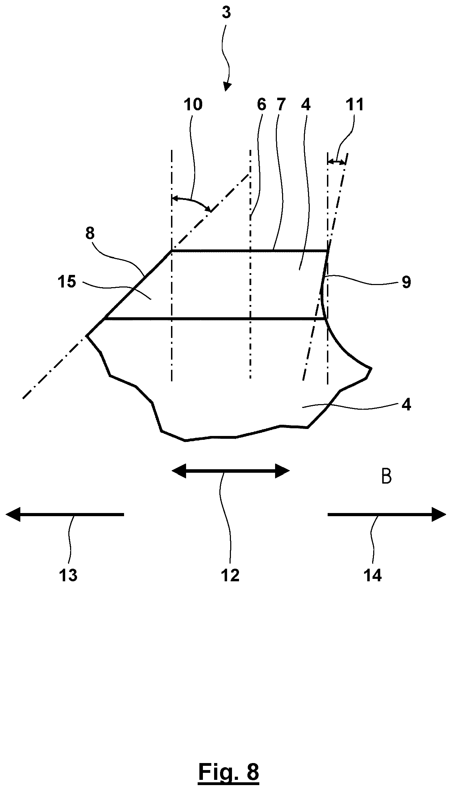

Bei einem negativen Zahnspitzwinkel ist die Anschlussfläche der Zahnspitze, die in der Bewegungsrichtung des Zerspanungswerkzeugs gesehen vorangeht, nach hinten geneigt. Bei einem positiven Zahnspitzwinkel ist die Anschlussfläche der Zahnspitze, die in der Bewegungsrichtung des Zerspanungswerkzeugs gesehen nachfolgt, nach vorne geneigt. Ein positiver Zahnspitzwinkel ist bezüglich seines Zerspanungsverhaltens aggressiver als ein negativer Zahnspitzwinkel. Zur Verdeutlichung wird auch auf Fig. 8 verwiesen, in der die erste Anschlussfläche 8 unter einem negativen Zahnspitzwinkel verläuft.

Das mit dem Zerspanungswerkzeug ausgeführte Fertigungsverfahren wird gemäß DIN 8589-0 als Spanen bezeichnet. Gemäß dieser Norm wird beim Spanen zwischen dem Spanen mit geometrisch bestimmten Schneiden und dem Spanen mit geometrisch unbestimmten Schneiden unterschieden. Zum Spanen mit geometrisch bestimmten Schneiden gehört auch das Sägen gemäß DIN 8589-6. Das hier vorliegende Zerspanungswerkzeug arbeitet mit geometrisch unbestimmten Schneiden, so dass es sich gemäß den zuvor genannten Normen um kein Sägewerkzeug handelt. Aus diesem Grund wird in dieser Anmeldung der zutreffende verallgemeinerte Begriff des Zerspanungswerkzeugs verwendet. In der Praxis werden Zerspanungswerkzeuge aus diesem technischen Gebiet mit Schneidpartikeln aber auch als Sägebänder bzw. Sägeblätter bezeichnet.

Unter Schneidpartikeln werden in dieser Anmeldung Teilchen verstanden, die das Zerspanen des Werkstücks bewirken. Sie bestehen aus einem Schneidstoff oderweisen diesen auf. Ein Schneidstoff ist ein Material, das zum Schneiden und Zerspanen von Werkstücken geeignet ist. Die Schneidpartikeln sind also gleichzeitig Schneidstoffpartikel.

Unter Pufferpartikeln werden in dieser Anmeldung Teilchen verstanden, die durch Ihr Vorhandensein und ihre Anordnung Abstände zwischen den Schneidpartikeln bewirken und somit einen Puffer zwischen den Schneidpartikeln bilden. Die Pufferpartikel bewirken zumindest nicht letztendlich das Zerspanen des Werkstücks und sind daher keine Schneidpartikel. Die Pufferpartikel können aus unterschiedlichen Materialien bestehen. Dabei ist es aber auch möglich, dass die Pufferpartikel aus einem Schneidstoff bestehen oder diesen aufweisen. Die Pufferpartikel sind dann Schneidstoffpartikel, aber keine Schneidpartikel.

### Weitere Beschreibung

Das neue Zerspanungswerkzeug ist ein 2-in-1-Zerspanungswerkzeug, dessen Seiten der Zähne bzw. Zahnspitzen für die effiziente Zerspanung unterschiedlicher Werkstoffe unterschiedlich ausgebildet sind. Durch die Asymmetrie der Zahnspitze werden deren unterschiedlichen Seiten unterschiedliche Aufgaben bzw. Bestimmungen zugeordnet. Die eine Seite der Zahnspitze ist für ein Zerspanen einer ersten Gruppe von Werkstoffen und die andere Seite für ein Zerspanen einer anderen zweiten Gruppe von Werkstoffen optimiert.

Beim Zerspanen mit einem rotierend angetriebenen Zerspanungswerkzeug wird durch den Antriebsrichtungssinn bestimmt, welche der zwei Seiten der Zahnspitze mit dem zu zerspanenden Werkstück zur Spanbildung bzw. Zertrümmerung des Werkstücks in Kontakt kommt. Dies ist die Seite, die in dem Bewegungsrichtungssinn des Zerspanungswerkzeug gesehen vorangeht. Die andere Seite, die im Bewegungsrichtungssinn nachfolgt, ist zunächst inaktiv. Diese inaktive Seite kann aber nun aktiviert und zur Zerspanung eines anderen zweiten Werkstoffs genutzt werden, indem entweder der Antriebsrichtungssinn und damit der Bewegungsrichtungssinn des Zerspanungswerkzeugs umgekehrt oder das Zerspanungswerkzeug in einer entgegengesetzten zweiten Orientierung in die Zerspanungsmaschine eingesetzt wird. Dann ist also die zweite Seite der Zahnspitze aktiv und die erste Seite inaktiv.

Die zu zerspanenden Werkstoffe sind insbesondere nichtmetallische anorganische Werkstoffe und Verbundwerkstoffe. Bei diesen Werkstoffen handelt es sich insbesondere um Glas, Graphit, Hartbrandkohle, Keramik, Silicium, Betonwerkstoffe, CFK, gesinterte Werkstoffe und Natursteine. Es kann sich aber auch um Metalle handeln.

Einige dieser Werkstoffe weisen vergleichsweise stark differierende Eigenschaften auf, was dazu führt, dass sich einige Werkstoffe besser mit einem positiven Zahnspitzwinkel oder einem Zahnspitzwinkel von etwa 0° und andere Werkstoffe mit einem negativen Zahnspitzwinkel zerspanen lassen.

So ist es beispielsweise möglich, eine der Anschlussflächen an der einen Seite spröden Werkstoffen und die andere Anschlussfläche an der anderen Seite duktilen (zähen) Werkstoffen zuzuordnen.

Bei den spröden Werkstoffen handelt es sich insbesondere um Keramik, Silicium, Glas, Gusseisen, Beton, Mauersteine, Natursteine, spröde Metalle und Bakelit. Bei den duktilen Werkstoffen handelt es sich insbesondere um duktilen Beton, duktiles Gusseisen und duktile Metalle. Duktile Werkstoffe, d. h. Werkstoffe mit einer hohen Zähigkeit, weisen eine gute elastisch-plastische Verformbarkeit vor einem Bruch auf.

Bei spröden Werkstoffen ist es bevorzugt, das Zerspanungswerkzeug so auszubilden und einzusetzen, dass diese mit einer Zahnspitze mit einer in dem Bewegungsrichtungssinn vorangehenden Anschlussfläche mit einem negativen Zahnspitzwinkel zerspant werden. Das dadurch erreichte schonendere Zerspanungsverhalten reduziert oder beseitigt die Gefahr, dass das Werkstück beim Zerspanen bricht.

Bei duktilen Werkstoffen ist es bevorzugt, das Zerspanungswerkzeug so auszubilden und einzusetzen, dass diese mit einer Zahnspitze mit einer in dem Bewegungsrichtungssinn vorangehenden Anschlussfläche mit einem positiven Zahnspitzwinkel oder einem Zahnspitzwinkel von 0° zerspant werden. Das dadurch erreichte aggressivere Zerspanungsverhalten eignet sich gut, um solche zähen und harten Werkstoffe schnell zu zerspanen.

Der erste Zahnspitzwinkel ist < 0° und der zweite Zahnspitzwinkel ist ≥ 0°. Die Zahnspitzwinkel unterscheiden sich dabei betragsmäßig, wodurch die Zahnspitze asymmetrisch ausgebildet ist.

Der erste Zahnspitzwinkel kann insbesondere zwischen < 0° und -80° und der zweite Zahnspitzwinkel zwischen 0° und 20° sein.

Der erste Zahnspitzwinkel kann zwischen -1° und -75°, insbesondere zwischen -1° und -73°, insbesondere zwischen -1° und -71 °, insbesondere zwischen -40° und -80°, insbesondere zwischen -40° und -75°, insbesondere zwischen -40° und -70°, insbesondere zwischen -40° und -50°, insbesondere zwischen -42° und -48°, insbesondere etwa -45°, sein. Der zweite Zahnspitzwinkel kann zwischen 0° und 15°, insbesondere zwischen 0° und 12°, insbesondere zwischen 0° und 10°, insbesondere zwischen 3° und 13°, insbesondere zwischen 5° und 15°, insbesondere zwischen 8° und 12°, insbesondere etwa 10° sein.

Die Anschlussflächen (oder Zerspanungsflächen) der Zahnspitzen können als ebene oder unebene Flächen ausgebildet sein. Bei einem negativen Zahnspitzwinkel ist die jeweilige aktive Anschlussfläche insbesondere eben ausgebildet. Bei einem positiven Zahnspitzwinkel ist die jeweilige aktive Anschlussfläche insbesondere mindestens teilweise uneben ausgebildet. So ist es z. B. möglich, dass die Anschlussfläche in ihrem vom Zahntragekörper wegweisenden Bereich eben ausgebildet ist und dann in einen kreisförmigen oder anders kurvenförmigen Bereich übergeht.

Die Zahnspitzen der Zähne des neuen Zerspanungswerkzeugs können mit mindestens zwei verschiedenen Arten von Partikeln belegt sein, die unterschiedliche Eigenschaften aufweisen und denen unterschiedliche Funktionen zugeordnet sind.

Bei der ersten Art der Partikel handelt es sich um Schneidpartikel aus Schneidstoff, wie diese grundsätzlich aus dem Stand der Technik bekannt sind. Die Schneidpartikel bewirken das Zerspanen des Werkstücks. Bei der neuen zweiten Art der Partikel handelt es sich um Pufferpartikel, die dazu dienen, die durchschnittlichen Abstände zwischen den Schneidpartikeln zu vergrößern.

Im Stand der Technik besteht beim Belegen der Zahnspitze eines Zahns eines Zerspanungswerkzeugs mit Schneidpartikeln das Problem, dass sich sogenannte Nester mit einer hohen Anzahl von Schneidpartikeln pro Fläche und somit einer hohen Packungsdichte bilden. Dies führt dazu, dass sich beim Zerspanen in diesem Bereich eine Vielzahl von geometrisch unbestimmten Schneiden mit dem zu zerspanenden Material in Eingriff befindet, was in einer Reduzierung der Schnittleistung resultiert. Dadurch wird die Vorschubkraft zu groß, was wiederum dazu führt, dass das Zerspanungswerkzeug seitlich ausgelenkt wird. Hierdurch wird kein in der gewünschten Weise gerader Schnitt erreicht. Um dem entgegenzuwirken, kann zwar eine höhere Vorschubgeschwindigkeit verwendet werden. Dies führt aber dazu, dass in anderen Bereichen, in denen die Packungsdichte der Schneidpartikel geringer ist, diese Schneidpartikel einer zu großen Schnittkraft ausgesetzt werden und daher schneller verschleißen. Hierdurch wird die Standzeit des Zerspanungswerkzeugs reduziert.

Des Weiteren besteht im Stand der Technik das Problem, dass bei einer derart hohen Packungsdichte der Schneidpartikel nicht ausreichend Zwischenräume für das durch Zerspanen abgetragene Material des zu zerspanenden Werkstoffs vorhanden ist und somit nicht im erforderlichen Maß aus dem Schnittkanal heraustransportiert wird.

Diese Nachteile des Stands der Technik werden nun durch die neuen Pufferpartikel des neuen Zerspanungswerkzeugs beseitigt bzw. wesentlich reduziert. Durch die Pufferpartikel wird das Bilden von Nestern und eine zu große Packungsdichte der Schneidpartikel verhindert bzw. wesentlich reduziert. Die Pufferpartikel bilden eine Art Abstandshalter zwischen den Schneidpartikeln, so dass die gewünschten Abstände zwischen den geometrisch unbestimmten Schneiden der Schneidpartikel realisiert sind.

Die Pufferpartikel befinden sich zwischen den Schneidpartikeln, wobei dies nicht so zu verstehen ist, dass jeder Pufferpartikel genau zwischen zwei benachbarten Schneidpartikeln angeordnet sein muss. Die genaue Lage der Partikel ergibt sich beim Herstellungsverfahren meist im Sinne einer stochastischen Verteilung, so dass auch mehrere Pufferpartikel und/oder mehrere Schneidpartikel benachbart zueinander angeordnet sein können. Die andere Anordnung eines Pufferpartikels genau zwischen zwei Schneidpartikeln liegt aber auch vor.

Wenn die Pufferpartikel im später Verlauf des Herstellungsverfahrens, bei einem separaten Initialisierungsverfahren oder auch erst zu Beginn des Zerspanens entfernt werden, werden die erforderlichen Freiräume zwischen den Schneidpartikeln geschaffen, um das zerspante Material aus dem Schnittkanal abzuführen.

Die Schneidpartikel und die Pufferpartikel besitzen unterschiedliche physikalische Eigenschaften. Sie bestehen aus unterschiedlichen Materialien und/oder wurden unterschiedlich behandelt, so dass sie mindestens hinsichtlich einer physikalischen Eigenschaft einen Unterschied besitzen, der es ermöglicht, den Partikeln unterschiedliche Funktionen zuzuordnen.

Die unterschiedliche physikalische Eigenschaft zwischen Schneidpartikeln und Pufferpartikeln wird so gewählt und genutzt, dass der jeweilige Partikel seine gewünschte Funktion erbringt. Bei den Pufferpartikeln bedeutet dies, dass die von ihnen zunächst gebildeten geometrisch unbestimmten Schneiden später unwirksam gemacht oder entfernt werden.

Eine erste Möglichkeit ist, dass die Pufferpartikel eine geringere Härte als die Schneidpartikel besitzen. Diese geringere Härte wird so ausgenutzt, dass die Pufferpartikel bei einem Prozess, dem auch die Schneidpartikel unterliegen, abgetragen oder entfernt werden, während die Schneidpartikel erhalten bleiben. Dieser Prozess kann die Verwendung des Zerspanungswerkzeugs zum Zerspanen selbst oder ein anderer separate dafür vorgesehener Prozess sein. Beispielsweise kann es sich um einen Schritt des Herstellungsverfahrens der Zerspanungswerkzeuge handeln, mit dem die Pufferpartikel ganz oder teilweise entfernt werden.

Die Pufferpartikel können auch alternativ oder zusätzlich eine geringere Hitzebeständigkeit als die Schneidpartikel besitzen. Diese geringere Hitzebeständigkeit wird in dem Sinne ausgenutzt, dass das Zerspanungswerkzeug einem Wärmeprozess unterzogen wird, bei dem eine derart hohe Temperatur herrscht, die zum vollständigen oder teilweisen Entfernen der Pufferpartikel führt, während die Schneidpartikel erhalten bleiben.

Die Pufferpartikel können auch alternativ oder zusätzlich eine geringere chemische Beständigkeit als die Schneidpartikel besitzen. Diese geringere chemische Beständigkeit wird in dem Sinne ausgenutzt, dass das Zerspanungswerkzeug einem chemischen Prozess unterzogen wird, bei dem eine Substanz auf beide Arten von Partikeln trifft und zum vollständigen oder teilweisen Entfernen der Pufferpartikel führt, während die Schneidpartikel erhalten bleiben.

Die Schneidpartikel und die Pufferpartikel können in einer Metallschicht, insbesondere einer galvanischen Abscheidungsschicht oder einer chemischen Metallabscheidungsschicht, teilweise eingebettet sein. Das Belegen der Zahnspitze mit den Schneidpartikeln und den Pufferpartikeln erfolgt dann also im Rahmen eines Galvanisierungsprozesses oder eines chemischen Metallabscheidungsprozesses, bei dem eine Metallschicht auf der Zahnspitze aufgebaut wird und sich die Schneidpartikel und Pufferpartikel derart teilweise in der Metallschicht festsetzen, dass sie mit einem Teil ihrer Oberfläche fest in der Metallschicht angeordnet sind und mit dem anderen Teil ihrer Oberfläche aus der Metallschicht herausragen, so dass die geometrisch unbestimmten Schneiden der Schneidpartikel bei der Verwendung des Zerspanungswerkzeugs mit dem Material des zu zerspanenden Werkstücks in Kontakt treten können.

Die Metallschicht besteht aus Metall, insbesondere Nickel, Chrom oder Kupfer, das sich als Metallionen beim Galvanisieren oder der chemischen Metallabscheidung auf der Zahnspitze abgelagert hat. Die Metallionen und das Metall der Metallschicht sind dabei nicht die Pufferpartikel. Die Pufferpartikel sind zusätzliche Partikel, die von den Metallionen und dem Metall der Metallschicht zu unterscheiden sind.

Die Schneidpartikel und die Pufferpartikel können aber auch in einer anders ausgebildeten Bindungsschicht teilweise eingebettet sein. Dabei können insbesondere die folgenden Bindungsarten verwendet werden: Kunstharzbindung, Keramikbindung, gesinterte Metallbindung und galvanische Bindung.

Der belegte Teil der Zahnspitze kann zu zwischen etwa 10 und 60 %, insbesondere zwischen etwa 10 und 50 %, insbesondere zwischen etwa 20 und 50 %, insbesondere zwischen etwa 30 und 50 %, aus Pufferpartikeln bestehen. Dieser Anteil ist auf die belegte Fläche der Zahnspitze und nicht die Gesamtfläche der Zahnspitze bezogen. Normalerweise existieren auch solche Bereiche der Zahnspitze, die weder mit Schneidpartikeln noch mit Pufferpartikeln belegt sind. Wenn die Zahnspitze mit einer Metallschicht überzogen ist, wie dies oberhalb erläutert wurde, sind diese von Schneidpartikeln und Pufferpartikeln freien Bereiche also von der Metallschicht bedeckt. Die prozentuale Bedeckung des belegten Teils der Zahnspitze entspricht bei einer in etwa übereinstimmenden Größe der Schneidpartikel und der Pufferpartikel in etwa dem Mischungsverhältnis dieser Partikel, mit dem diese für den Belegungsprozess bereitgestellt werden. Die zuvor genannten Zahlenbereiche gewährleisten dabei unter Berücksichtigung der stochastischen Verteilung, dass hinreichend große Abstände zwischen den Schneidpartikeln realisiert werden, um die oberhalb beschriebenen negativen Effekte beim Zerspanen zu vermeiden.

Die Schneidpartikel und die Pufferpartikel können in etwa die gleiche durchschnittliche Größe besitzen. Wie oberhalb ausgeführt wurde, entspricht dann das Mischungsverhältnis vor dem Belegprozess in etwa dem Verhältnis der Partikel auf der belegten Zahnspitze. Es ist aber auch möglich, dass die Schneidpartikel und die Pufferpartikel unterschiedliche durchschnittliche Größen besitzen.

Die durchschnittliche Größe der Schneidpartikel und die durchschnittliche Größe der Pufferpartikel kann zwischen etwa 60 und 800 µm, insbesondere zwischen etwa 100 und 800 µm, insbesondere zwischen etwa 200 und 800 µm, insbesondere zwischen etwa 300 und 800 µm, insbesondere zwischen etwa 400 und 800 µm, insbesondere zwischen etwa 500 und 800 µm, insbesondere zwischen etwa 500 und 700 µm, insbesondere etwa 600 µm, betragen. Derartige Größenordnungen stellen sicher, dass die Schneidpartikel die gewünschten geometrisch unbestimmten Schneiden bereitstellen und durch die Pufferpartikel in der gewünschten Weise voneinander beabstandet sind.

Die Schneidpartikel können hart oder hochhart sein.

Unter harten Schneidpartikeln werden dabei insbesondere solche aus Korund (Al₂O₃) oder Siliciumcarbid (SiC) verstanden.

Die hochharten Schneidpartikel können monokristallinen Diamant (MKD), polykristallinen Diamant (CVD-D), polykristallinen Diamant (PKD), kubisches Bornitrid (CBN), Schneidkeramik, Hartmetall oder Kombinationen daraus aufweisen.

Die Pufferpartikel können monokristallinen Diamant (MKD), polykristallinen Diamant (CVD-D), polykristallinen Diamant (PKD), kubisches Bornitrid (CBN), Siliciumcarbid, Schneidkeramik, Hartmetall, Kunststoff, Glas, Keramik, Borcarbid, Nickel, Kupfer oder Kombinationen daraus aufweisen.

Die Schneidpartikel können kubisches Bornitrid (CBN) und die Pufferpartikel Diamant aufweisen. Da sich Diamant ab etwa 720 °C auflöst und CBN bei dieser Temperatur beständig ist, wird in diesem Fall die geringere Hitzebeständigkeit ausgenutzt, um die Pufferpartikel ganz oder teilweise zu entfernen.

Die Schneidpartikel können Diamant, Siliciumcarbid, Schneidkeramik, Hartmetall oder Kombinationen daraus aufweisen und die Pufferpartikel Kunststoff, Glas, Keramik, Borcarbid, Nickel, Kupfer oder Kombinationen aufweisen.

Die Zahnspitze kann durch ein separat hergestelltes Aufsatzelement gebildet oder mitgebildet werden. Das Aufsatzelement ist über eine Verbindungszone fest mit dem restlichen Teil des Zahns verbunden. Geeignete Verbindungsverfahren sind z. B. Kleben, Löten oder Schweißen.

Die erste Anschlussfläche des die freie Zahnspitze bildenden Aufsatzelements kann im Wesentlichen übereinstimmend mit dem unmittelbar anschließenden Bereich der ersten Anschlussfläche des restlichen Teil des Zahns ausgebildet sein. Es ist aber auch möglich, dass sie unterschiedlich ausgebildet ist. Entsprechendes gilt für die zweite Anschlussflächen.

Das Aufsatzelement ist asymmetrisch ausgebildet, um die asymmetrische Zahnspitze zu bilden. Der unmittelbar anschließende Bereich der ersten Anschlussfläche des restlichen Teil des Zahns kann ebenfalls asymmetrisch ausgebildet sein. Es ist aber auch möglich, dass er symmetrisch ausgebildet ist.

Das Aufsatzelement kann als Sinterelement ausgebildet sein. Das Sinterelement besteht aus einem Gemisch aus einem Binder und den Schneidpartikeln. Bei dem Binder kann es sich beispielsweise um Kupfer, Kobalt, Eisen, Bronze, Nickel oder Mischungen daraus handeln. Es ist möglich, dass weiterhin Pufferpartikel vorhanden sind

Es versteht sich, dass das Zerspanungswerkzeug nicht nur einen derart ausgebildeten Zahn, sondern eine Mehrzahl, insbesondere eine Vielzahl, derartiger Zähne aufweist. Es kann sich dabei um alle Zähne des Zerspanungswerkzeugs handeln. Es ist aber auch möglich, dass zusätzlich auch anders ausgebildete Zähne an dem Zerspanungswerkzeug angeordnet sind.

Das Zerspanungswerkzeug weist einen Zahntragekörper auf, an dem die Zähne angeordnet sind. Die Zähne können einstückig mit dem Zahntragekörper oder separat dazu ausgebildet sein. In letzterem Fall werden die Zähne oder Zahnspitzen in geeigneter Weise - insbesondere durch Schweißen oder Löten - mit dem Zahntragekörper oder Zahnvorsprüngen fest verbunden. Der Zahntragekörper weist entweder eine langgestreckte bandförmige oder eine kreisscheibenförmige Ausbildung auf. Anders gesagt handelt es sich bei dem Zerspanungswerkzeug entweder um ein einem Sägeband ähnliches Zerspanungsband oder ein einem Kreissägeblatt ähnliches Kreiszerspanungsblatt.

Die Zähne können mit einer konstanten Teilung an dem Zahntragekörper angeordnet sein. Dies bedeutet, dass der Abstand zwischen den Zähnen gleichbleibend ist. Es ist aber auch möglich, dass die Zähne mit einer variablen Teilung an dem Zahntragekörper angeordnet sind. Dies bedeutet, dass die Abstände zwischen den Zähnen variieren. Dabei können insbesondere zwischen zwei und zehn unterschiedliche Abstände zwischen den Zähnen an dem Zerspanungswerkzeug existieren.

Der Zahntragekörper ist aus einem geeigneten Material ausgebildet. Dabei handelt es sich insbesondere um einen Metallwerkstoff. Beispiele sind Federstahl und legierter Vergütungsstahl.

Bei dem Zerspanungswerkzeug kann es sich aber auch um ein anderes Zerspanungswerkzeug mit geometrisch unbestimmten Schneiden handeln. Das Zerspanungswerkzeug kann insbesondere eine Schleifscheibe, ein Schleifband oder ein anderes Werkzeug zum Schleifen, Honen, Läppen, Strahlspanen oder Gleitspanen sein.

Die zu zerspanenden Werkstoffe sind insbesondere nichtmetallische anorganische Werkstoffe und Verbundwerkstoffe. Bei diesen Werkstoffen handelt es sich insbesondere um Glas, Graphit, Hartbrandkohle, Keramik, Silicium, Betonwerkstoffe, CFK, gesinterte Werkstoffe und Natursteine. Es kann sich aber auch um Metalle handeln.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Zahn die Rede ist, ist dies so zu verstehen, dass genau ein Zahn, zwei Zähne oder mehr Zähne vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht eines Teils einer ersten beispielhaften Ausführungsform des neuen Zerspanungswerkzeugs.
- **Fig. 2**: zeigt eine Seitenansicht des Zerspanungswerkzeugs gemäß Fig. 1.
- **Fig. 3**: zeigt eine Ansicht von oben auf das Zerspanungswerkzeug gemäß Fig. 1.
- **Fig. 4**: zeigt eine Ansicht von vorne des Zerspanungswerkzeugs gemäß Fig. 1.
- **Fig. 5**: zeigt das Detail B des Zerspanungswerkzeugs aus Fig. 2.
- **Fig. 6**: zeigt das Zerspanungswerkzeug gemäß Fig. 1 unter Weglassung der Darstellung der Schneidpartikel.
- **Fig. 7**: zeigt das Zerspanungswerkzeug gemäß Fig. 2 unter Weglassung der Darstellung der Schneidpartikel.
- **Fig. 8**: zeigt das Detail B gemäß Fig. 5 unter Weglassung der Darstellung der Schneidpartikel.
- **Fig. 9**: zeigt eine perspektivische Ansicht einer zweiten beispielhaften Ausführungsform des neuen Zerspanungswerkzeugs unter Weglassung der Darstellung der Schneidpartikel.
- **Fig. 10**: zeigt eine Seitenansicht des Zerspanungswerkzeugs gemäß Fig. 9.
- **Fig. 11**: zeigt eine perspektivische Ansicht einer dritten beispielhaften Ausführungsform des neuen Zerspanungswerkzeugs unter Weglassung der Darstellung der Schneidpartikel.
- **Fig. 12**: zeigt eine Seitenansicht des Zerspanungswerkzeugs gemäß Fig. 11.
- **Fig. 13**: zeigt eine Seitenansicht einer vierten beispielhaften Ausführungsform des neuen Zerspanungswerkzeugs unter Weglassung der Darstellung der Schneidpartikel.
- **Fig. 14**: zeigt eine perspektivische Ansicht eines Teils des Zerspanungswerkzeugs gemäß Fig. 13.
- **Fig. 15**: zeigt das Detail B aus Fig. 13.
- **Fig. 16**: zeigt das Detail A aus Fig. 13.
- **Fig. 17**: zeigt eine Zahnspitze eines Zahns einer fünften beispielhaften Ausführungsform des neuen Zerspanungswerkzeugs von vorne.
- **Fig. 18**: zeigt ein Detail einer Zahnspitze gemäß der fünften beispielhaften Ausführungsform des neuen Zerspanungswerkzeugs.
- **Fig. 19**: zeigt eine Fig. 8 entsprechende Detailansicht einer Zahnspitze gemäß einer weiteren beispielhaften Ausführungsform des neuen Zerspanungswerkzeugs.
- **Fig. 20**: zeigt eine Fig. 8 entsprechende Detailansicht einer Zahnspitze gemäß einer weiteren beispielhaften Ausführungsform des neuen Zerspanungswerkzeugs.
- **Fig. 21**: zeigt eine Fig. 8 entsprechende Detailansicht einer Zahnspitze gemäß einer weiteren beispielhaften Ausführungsform des neuen Zerspanungswerkzeugs.
- **Fig. 22**: zeigt eine Fig. 8 entsprechende Detailansicht einer Zahnspitze gemäß einer weiteren beispielhaften Ausführungsform des neuen Zerspanungswerkzeugs.

### FIGURENBESCHREIBUNG

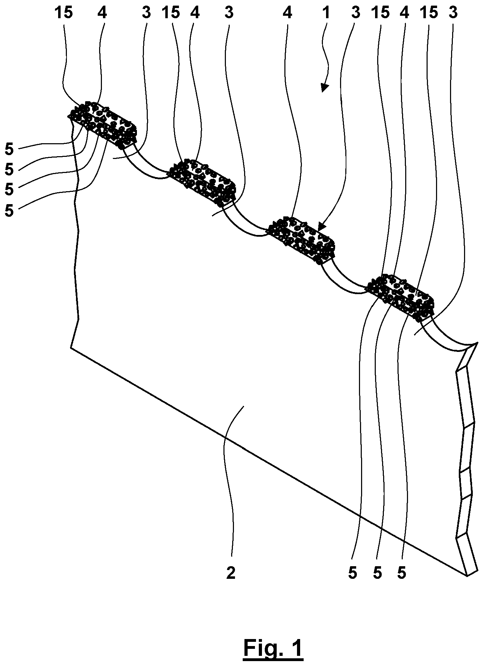

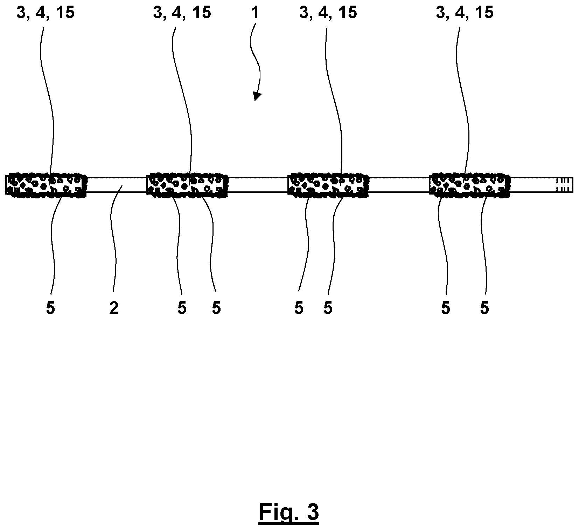

**Fig. 1-5** zeigen verschiedene Ansichten einer ersten beispielhaften Ausführungsform eines neuen Zerspanungswerkzeugs 1. Das Zerspanungswerkzeug 1 weist einen Zahntragekörper 2 auf. Im vorliegenden Fall handelt es sich um ein langgestrecktes bandförmiges Zerspanungswerkzeug 1, von dem nur ein Ausschnitt dargestellt ist. Es versteht sich, dass sich das Zerspanungswerkzeug 1 über die in Fig. 1 dargestellten Abbruchlinien entsprechend weiter erstreckt. Bei dem Zerspanungswerkzeug 1 könnte es sich aber auch um ein kreisscheibenförmiges Zerspanungswerkzeug 1 handeln. Die nachfolgenden Ausführungen gelten auch für eine solche Ausführungsform.

Das Zerspanungswerkzeug 1 weist eine Mehrzahl von an dem Zahntragekörper 2 angeordneten Zähnen 3 auf. Die Zähne 3 können ganz oder teilweise einstückig mit dem Zahntragekörper 2 ausgebildet sein. Im vorliegenden Beispiel sind die Zähne 3 mit einer konstanten Teilung an dem Zahntragekörper 2 angeordnet. Sie könnten aber auch mit einer variablen Teilung an dem Zahntragekörper 2 angeordnet sein.

Die Zähne 3 weisen jeweils eine Zahnspitze 4 auf, die von dem Zahntragekörper 2 weg weist. Die Zahnspitze 4 ist ganz oder teilweise in einem Schneidpartikelbelagbereich 15 mit Schneidpartikeln 5 belegt. Die Schneidpartikel 5 sind hart oder hochhart. Es kann sich z. B. um Korund (AL₂O₃), monokristallinen Diamant (MKD), polykristallinen Diamant (CVD-D) usw. handeln. Aus Übersichtlichkeitsgründen sind nur einige wenige der Schneidpartikel mit dem Bezugszeichen 5 gekennzeichnet. Das Ende des Schneidpartikelbelagbereich 15, in dem die Schneidpartikel 5 vorhanden sind, ist mittels einer horizontalen Linie symbolisiert.

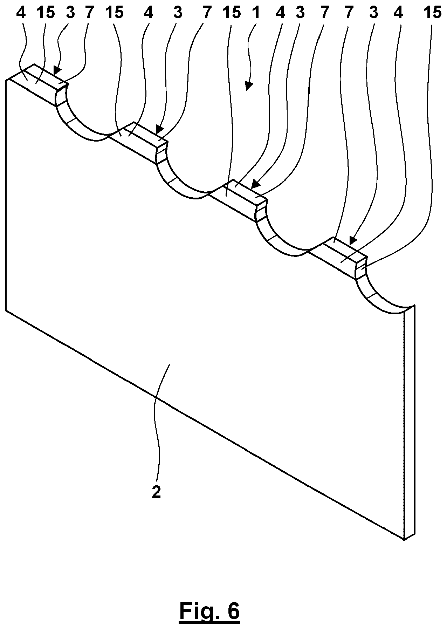

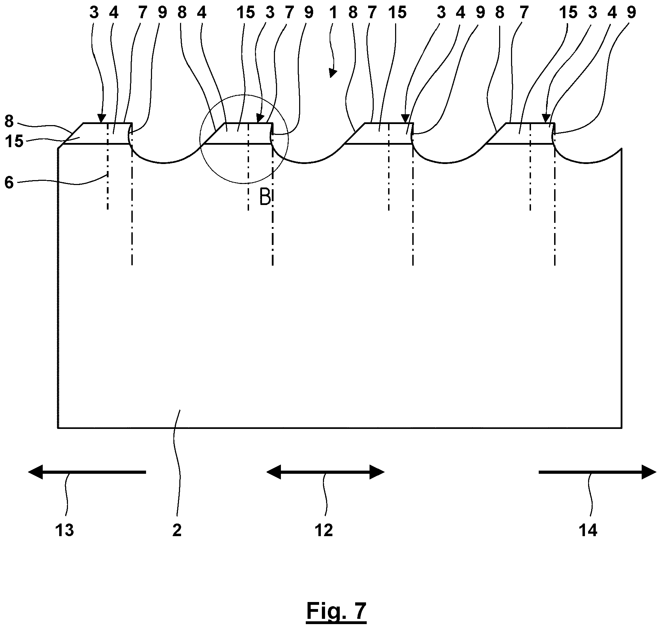

Die geometrische Ausbildung der Zahnspitze 4 ist anhand der Darstellungen der **Fig. 6****,** **7** **und** **8** leichter erkennbar. In diesen Figuren wurden im Vergleich zu den entsprechenden Fig. 1, 2 und 5 die Schneidpartikel nicht dargestellt. Es versteht sich aber, dass bei diesen Figuren und auch den folgenden Figuren stets die Schneidpartikel vorhanden sind. Auch hier ist aber das Ende des Bereichs, in dem Schneidpartikel vorhanden sind, mittels einer horizontalen Linie symbolisiert.

Die Zahnspitzen 4 weisen jeweils eine Längsmittelachse 6, eine Plateaufläche 7, eine erste Anschlussfläche 8 und eine zweite Anschlussfläche 9 auf. Die erste Anschlussfläche 8 und die zweite Anschlussfläche 9 schließen direkt an die Plateaufläche 7 an. Es wäre aber auch möglich, dass ein indirekter Anschluss besteht, d. h. zwischen der Plateaufläche 7 und der jeweiligen Anschlussfläche 8, 9 noch eine andere Fläche angeordnet ist.

Die Zahnspitze 4 ist asymmetrisch ausgebildet. Dies bedeutet, dass die erste Anschlussfläche 8 auf einer ersten Seite der Längsmittelachse 6 (hier: die linke Seite) unter einem ersten Zahnspitzwinkel 10 mit einem ersten Betrag zur Plateaufläche 7 verläuft und die zweite Anschlussfläche 9 auf der entgegengesetzten zweiten Seite der Längsmittelachse 6 (hier: die rechte Seite) unter einem zweiten Zahnspitzwinkel 11 mit einem anderen zweiten Betrag zur Plateaufläche 7 verläuft (siehe Fig. 8).

Die Zahnspitzwinkel 10, 11 werden dabei relativ zu einer vertikalen Linie bestimmt. Bei dieser dargestellten beispielhaften Ausführungsform ist der Betrag des ersten Zahnspitzwinkels 10 etwa 45° und der Betrag des zweiten Zahnspitzwinkels 11 etwa 20°.

Wenn sich das Zerspanungswerkzeug 1 in einem ersten Bewegungsrichtungssinn 13 (hier: nach links) bewegt, ist die erste Anschlussfläche 8 die aktive Zerspanungsfläche, die als erste mit dem zu zerspanenden Werkstoff des Werkstücks in Kontakt kommt. In diesem ersten Bewegungsrichtungssinn 13 gesehen ist der erste Zahnspitzwinkel 10 ein negativer Zahnspitzwinkel. Das Zerspanungswerkzeug 1 weist beim Zerspanen in diesem ersten Bewegungsrichtungssinn 13 ein schonendes Zerspanungsverhalten auf und eignet sich besonders gut zum Zerspanen spröder Werkstoffe.

Wenn das Zerspanungswerkzeug 1 hingegen in dem entgegengesetzten zweiten Bewegungsrichtungssinn 14 (hier: nach rechts) angetrieben und bewegt wird, ist die zweite Anschlussfläche 9 die aktive Zerspanungsfläche. Dies kann z. B. durch Umschalten der Drehrichtung des Motors der das Zerspanungswerkzeug 1 antreibenden Zerspanungsmaschine erreicht werden. Eine andere Möglichkeit zur Aktivierung der zweiten Anschlussfläche 9 ist es, die Orientierung (Anordnung) des Zerspanungswerkzeugs 1 in der Zerspanungsmaschine umzukehren. In beiden Fällen wird erreicht, dass nun die aktive Zerspanungsfläche einen positiven Zahnspitzwinkel aufweist, wodurch sich ein aggressiveres Zerspanungsverhalten ergibt. Nun eignet sich ein und dasselbe Zerspanungswerkzeug 1 besonders gut zum Zerspanen duktiler Werkstoffe.

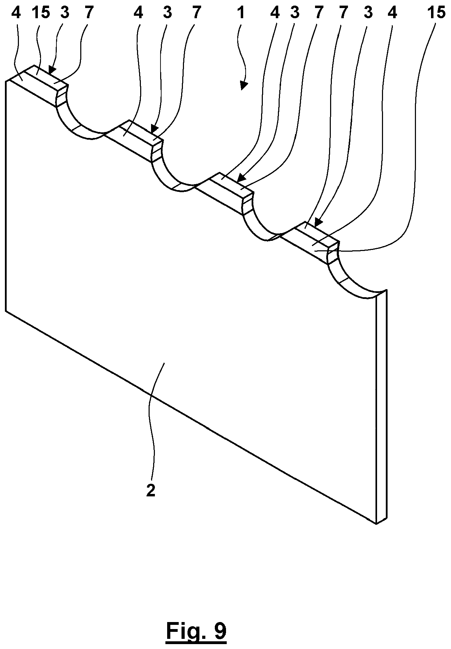

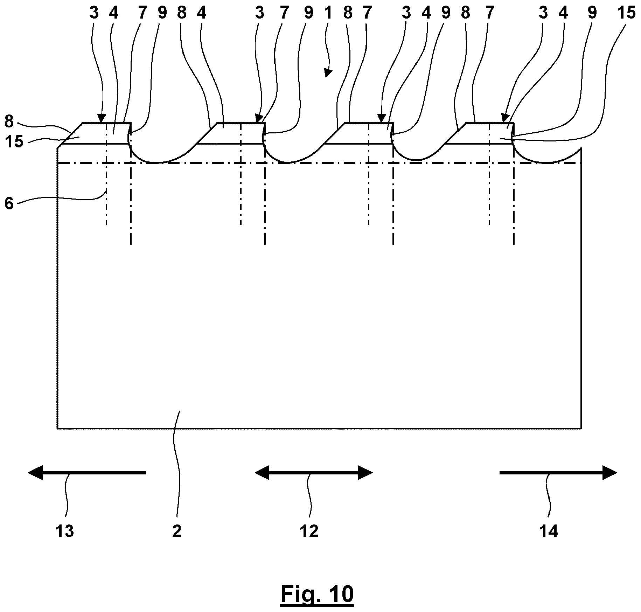

In **Fig. 9** **und** **10** ist eine zweite beispielhafte Ausführungsform des neuen Zerspanungswerkzeugs 1 dargestellt. Diese Ausführungsform weist viele Gemeinsamkeiten mit den zuvor beschriebenen Ausführungsformen auf, so dass zwecks Vermeidung unnötiger Wiederholungen auf die diesbezüglichen oberhalb angegebenen Ausführungen verwiesen wird. Vergleichbares gilt auch für die weiteren unterhalb beschriebenen Ausführungsformen.

Im Unterschied dazu liegt hier eine variable Teilung der Zähne 3 an dem Zahntragekörper 2 vor, was anhand der längeren Strichpunktlinien in Fig. 10 nachvollziehbar ist. Der Abstand zwischen dem ersten Zahn 3 und dem zweiten Zahn 3 ist größer als der Abstand zwischen dem zweiten Zahn 3 und dem dritten Zahn 3 (siehe Fig. 10: von links nach rechts gesehen). Der Abstand zwischen dem dritten Zahn 3 und dem vierten Zahn 3 ist wiederum kleiner als der Abstand zwischen dem zweiten Zahn 3 und dem dritten Zahn 3. Es könnte aber auch eine andere variable Teilung vorliegen.

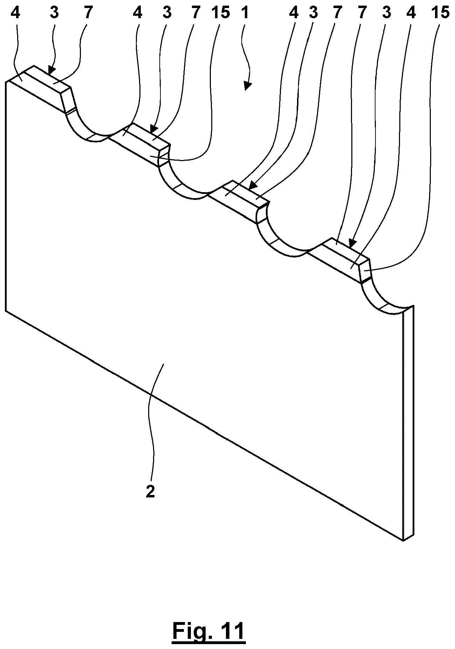

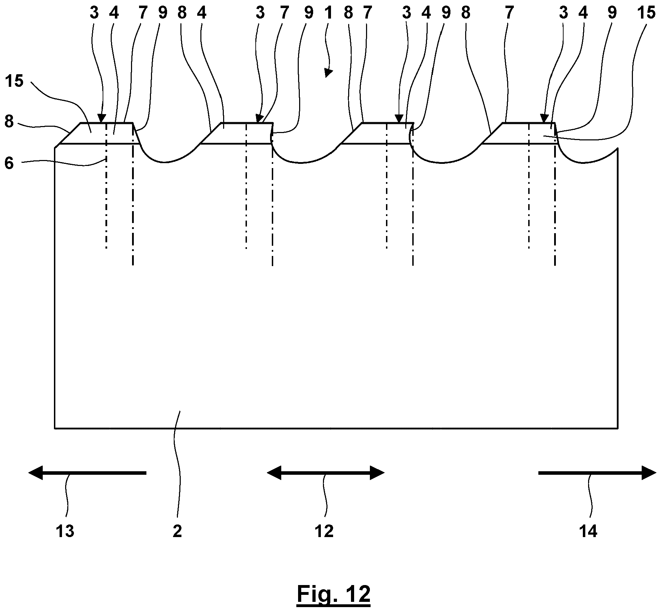

In **Fig. 11** **und** **12** ist eine dritte beispielhafte Ausführungsform des neuen Zerspanungswerkzeugs 1 dargestellt. Hier sind hier die Zähne 3 untereinander unterschiedlich ausgebildet. Neben der oberhalb beschriebenen ersten Art von Zähnen 3 (Fig. 12: der zweite Zahn 3 und der dritte Zahn 3 von links gesehen) existiert noch eine zweite Art von Zähnen 3 (Fig. 12: der erste Zahn 3 und der vierte Zahn 3 von links gesehen), bei der beide Zahnspitzwinkel 10, 11 negativ sind. Auch bei diesen Zähnen 3 ist die Zahnspitze 4 asymmetrisch ausgebildet, da die Beträge der Zahnspitzwinkel 10, 11 unterschiedlich groß sind. Der Betrag des ersten Zahnspitzwinkels 10 des ersten Zahns 3 ist hier etwa 45°, während der Betrag des zweiten Zahnspitzwinkels 11 des ersten Zahns 3 etwa 20° ist. Bei dem vierten Zahn 3 ist der Betrag des ersten Zahnspitzwinkels 10 ebenfalls etwa 45°, während der Betrag des zweiten Zahnspitzwinkels 11 des vierten Zahns 3 etwa 10° ist. Die Zähne 3 sind mit einer konstanten Teilung an dem Zahntragekörper 2 angeordnet. Sie könnten aber auch in einer variablen Teilung angeordnet sein.

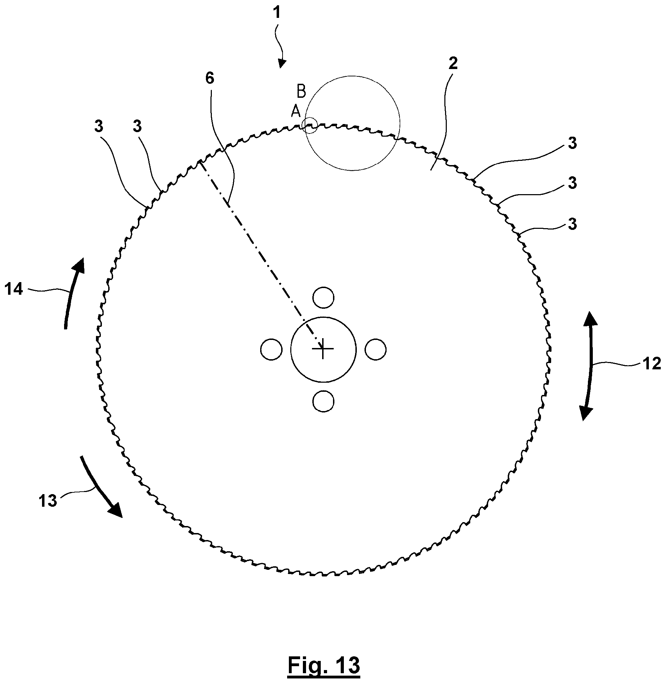

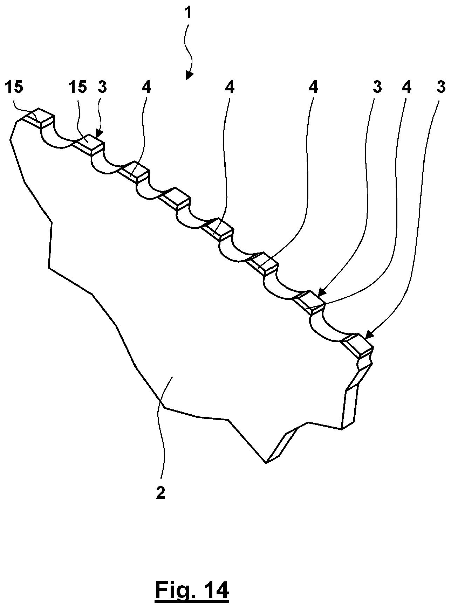

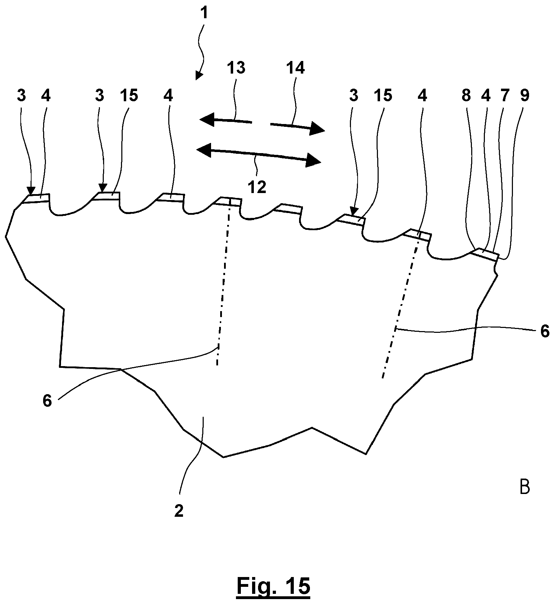

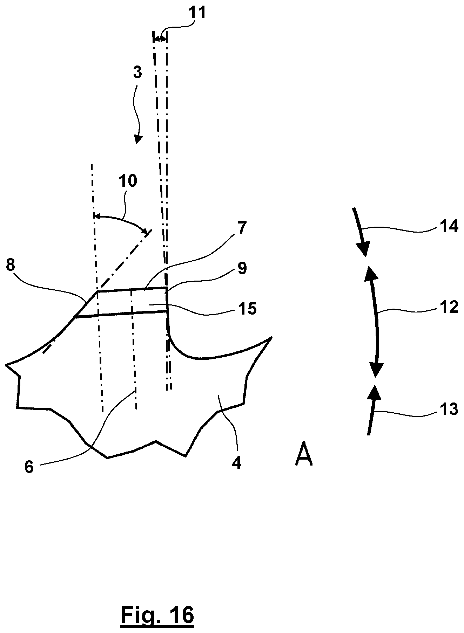

In **Fig. 13-16** sind verschiedene Ansichten einer vierten beispielhaften Ausführungsform des neuen Zerspanungswerkzeugs 1 dargestellt. Hier ist das Zerspanungswerkzeug 1 als Kreiszerspanungsblatt ausgebildet, d. h. der Zahntragekörper 2 ist kreisscheibenförmig ausgebildet.

Die Zähne 3 sind mit einer variablen Teilung an dem Zahntragekörper 2 angeordnet. Der erste Zahnspitzwinkel 10 ist negativ. Sein Betrag ist etwa 45°. Der zweite Zahnspitzwinkel 11 ist etwa 2°.

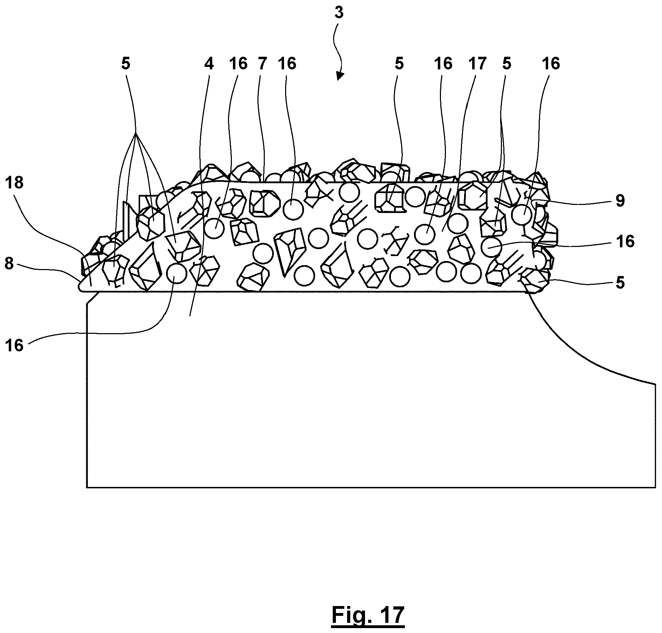

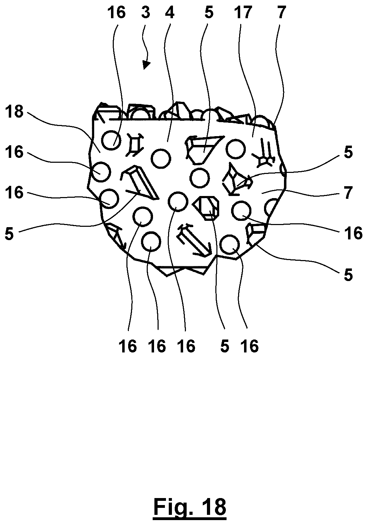

**Fig. 17** **und** **18** zeigen eine fünfte beispielhafte Ausführungsform des neuen Zerspanungswerkzeugs 1. In diesem Fall ist die Zahnspitze 4 nicht nur mit Schneidpartikeln 5, sondern auch mit Pufferpartikeln 16 belegt. Die Schneidpartikel 5 und die Pufferpartikel 16 sind in einer Metallschicht 17 fest angeordnet und teilweise in dieser eingebettet. Sie ragen also teilweise aus der Metallschicht 17 heraus. Bei der Metallschicht 17 handelt es sich insbesondere um eine galvanische Abscheidungsschicht oder eine chemische Metallabscheidungsschicht.

Die Schneidpartikel 5 und die Pufferpartikel 16 unterscheiden sich hinsichtlich ihres Materials und ihrer zu erfüllenden Funktion. Hierzu wird auf die oberhalb angegebenen ausführlichen Ausführungen verwiesen.

Die Schneidpartikel 5, die Pufferpartikel 16 und die Metallschicht 17 bilden gemeinsam einen Belagbereich 18, der die gewünschte Zerspanungsfunktion des Zerspanungswerkzeugs 1 erbringt, indem er die dafür erforderlichen Schneiden beinhaltet. Dieser Belagbereich 18 erstreckt sich über die gesamte Zahnspitze 4 oder einen Teil der Zahnspitze 4. Dies ist der belegte Teil der Zahnspitze 4.

Es versteht sich, dass es sich bei den Darstellungen der Fig. 17 und 18 um keine maßstabsgerechten Darstellungen handelt und auch die Geometrie der Partikel 5, 16 in der Praxis anders aussieht oder aussehen kann. Die Partikel 5, 16 können auch in etwa die gleiche Geometrie besitzen. Die Darstellung soll die Partikel 5, 16 unterscheidbar machen und verdeutlichen, dass durch die Anordnung der Pufferpartikel 16 Freiräume zwischen den Schneidpartikeln 5 geschaffen werden, die bei einer reinen Anordnung von Schneidpartikeln 5 - wie dies im Stand der Technik bekannt ist - nicht oder nicht in diesem Ausmaß vorhanden sind.

Zur der weiteren möglichen Ausbildung des Zerspanungswerkzeugs 1 und der Zahnspitzen 4 wird auf die Ausführungen zu den Fig. 1-16 verwiesen. Anders gesagt können also auch die Ausführungsformen des Zerspanungswerkzeugs 1 gemäß Fig. 1-16 die Pufferpartikel 16 aufweisen.

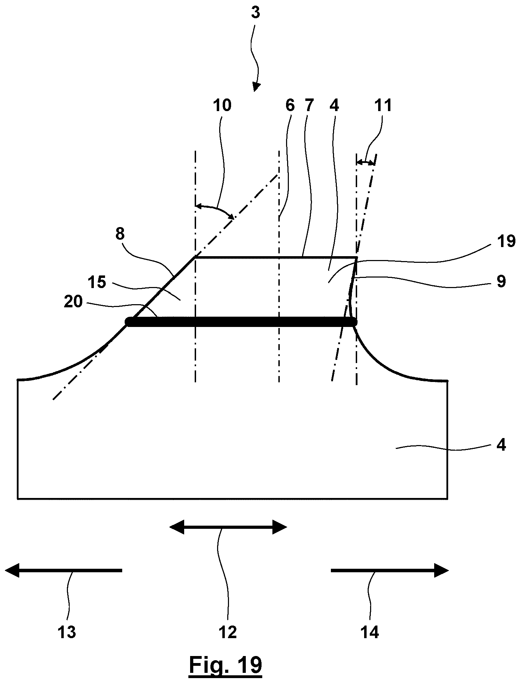

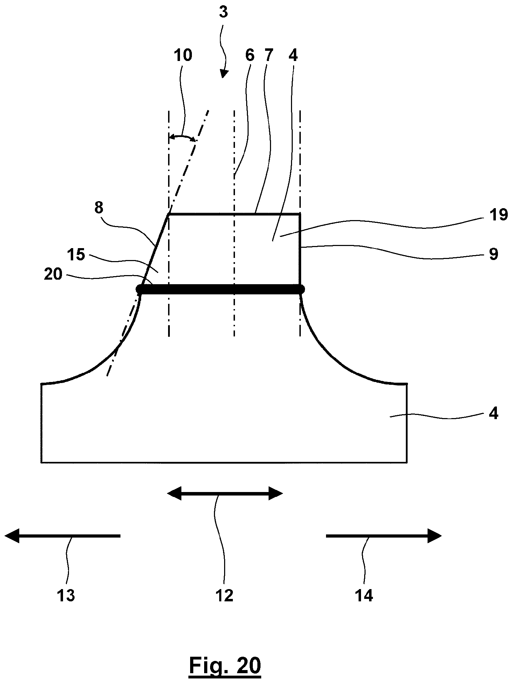

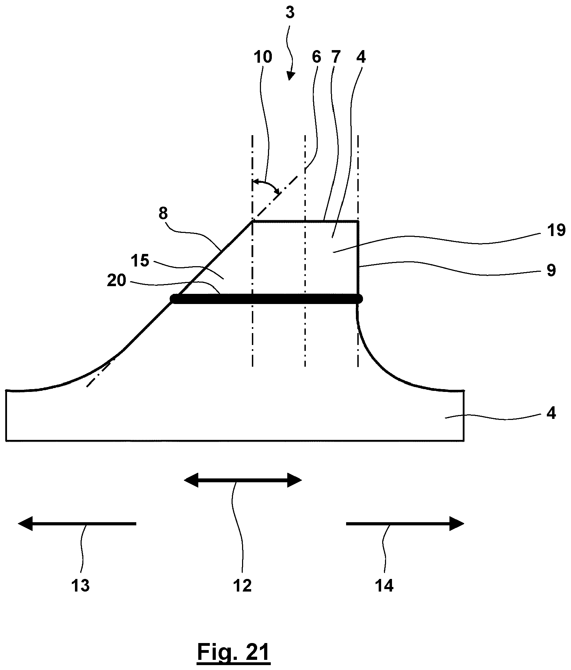

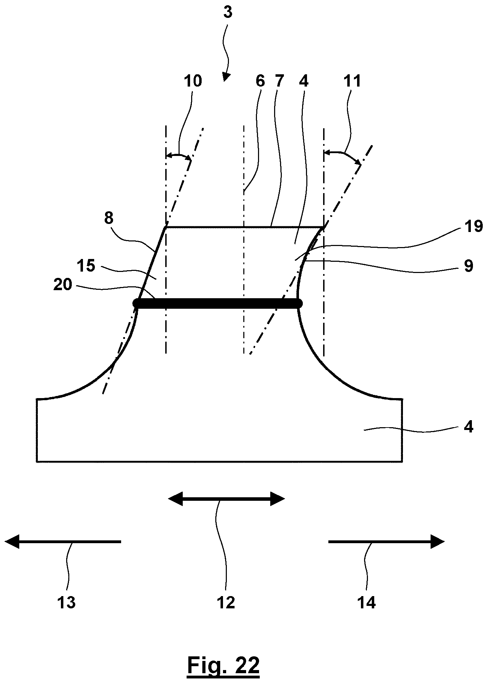

**Fig. 19-22** zeigen Fig. 8 entsprechende Detailansichten weiterer beispielhafter Ausführungsformen der Zahnspitze 4 des Zerspanungswerkzeugs 1. Bei diesen Ausführungsformen wird die Zahnspitze 4 durch ein separat hergestelltes Aufsatzelement 19 gebildet bzw. mitgebildet. Das Aufsatzelement 19 ist über eine Verbindungszone 20 fest mit dem restlichen Teil des Zahns 3 verbunden. Geeignete Verbindungsverfahren sind z. B. Kleben, Löten oder Schweißen. Die Verbindungszone 20 ist durch die dickere schwarze Linie symbolisch dargestellt.

Es ist anhand der verschiedenen Ausführungsformen erkennbar, dass die erste Anschlussfläche 8 des die freie Zahnspitze 4 bildenden Aufsatzelements 19 im Wesentlichen übereinstimmend mit oder unterschiedlich zu dem unmittelbar anschließenden Bereich der ersten Anschlussfläche 8 des restlichen Teil des Zahns 3 ausgebildet sein kann. Entsprechendes gilt für die zweite Anschlussflächen 9.

Das Aufsatzelement 19 kann als Sinterelement ausgebildet sein. Das Sinterelement besteht aus einem Gemisch aus einem Binder und den Schneidpartikeln. Bei dem Binder kann es sich beispielsweise um Kupfer, Kobalt, Eisen, Bronze, Nickel oder Mischungen daraus handeln. Es ist möglich, dass weiterhin Pufferpartikel vorhanden sind.

### BEZUGSZEICHENLISTE

- 1: Zerspanungswerkzeug
- 2: Zahntragekörper
- 3: Zahn
- 4: Zahnspitze
- 5: Schneidpartikel
- 6: Längsmittelachse
- 7: Plateaufläche
- 8: erste Anschlussfläche
- 9: zweite Anschlussfläche
- 10: erster Zahnspitzwinkel
- 11: zweiter Zahnspitzwinkel
- 12: Bewegungsrichtung
- 13: erster Bewegungsrichtungssinn
- 14: zweiter Bewegungsrichtungssinn
- 15: Schneidpartikelbelagbereich
- 16: Pufferpartikel
- 17: Metallschicht
- 18: Belagbereich
- 19: Aufsatzelement
- 20: Verbindungszone

## Patentansprüche

1. Zerspanungswerkzeug (1) in Ausgestaltung als Sägeband oder Sägeblatt mit einem Zahn (3) mit einer Zahnspitze (4), die zur Bildung einer Mehrzahl geometrisch unbestimmter Schneiden mit Schneidpartikeln (5) belegt ist, wobei
die Zahnspitze (4) eine Längsmittelachse (6), eine Plateaufläche (7), eine erste Anschlussfläche (8) und eine zweite Anschlussfläche (9) aufweist, wobei
die erste Anschlussfläche (8) und die zweite Anschlussfläche (9) direkt oder indirekt an die Plateaufläche (7) anschließen, und
die erste Anschlussfläche (8) auf einer ersten Seite der Längsmittelachse (6) unter einem ersten Zahnspitzwinkel (10) mit einem ersten Betrag zur Plateaufläche (7) verläuft, und
die Zahnspitze (4) asymmetrisch ausgebildet ist,
die zweite Anschlussfläche (9) auf einer entgegengesetzten zweiten Seite der Längsmittelachse (6) unter einem zweiten Zahnspitzwinkel (11) mit einem anderen zweiten Betrag zur Plateaufläche (7) verläuft,
der erste Zahnspitzwinkel (10) in einem ersten Bewegungsrichtungssinn (13) gesehen, in dem die erste Anschlussfläche (8) der zweiten Anschlussfläche (9) vorangeht, < 0° ist, und
der zweite Zahnspitzwinkel (11) in einem entgegengesetzten zweiten Bewegungsrichtungssinn (14) gesehen, in dem die zweite Anschlussfläche (9) der ersten Anschlussfläche (8) vorangeht, ≥ 0° ist,
**dadurch gekennzeichnet dass**,
wenn sich das Zerspanungswerkzeug (1) in einem ersten Bewegungsrichtungssinn (13) bewegt, die erste Anschlussfläche (8) die aktive Zerspanungsfläche ist, die als erste mit dem zu zerspanenden Werkstück in Kontakt kommt, und, wenn das Zerspanungswerkzeug (1) in dem entgegengesetzten zweiten Bewegungsrichtungssinn (14) bewegt wird, die zweite Anschlussfläche (9) die aktive Zerspanungsfläche ist, und
der erste Zahnspitzwinkel (10) zwischen < 0° und -80° und der zweite Zahnspitzwinkel (11) zwischen 0° und 20° ist.

2. Zerspanungswerkzeug (1) nach Anspruch 1, **dadurch gekennzeichnet, dass**
der erste Zahnspitzwinkel (10) zwischen -1° und -75°, insbesondere zwischen -1° und -73°, insbesondere zwischen -1° und -71°, insbesondere zwischen -40° und -80°, insbesondere zwischen -40° und -75°, insbesondere zwischen -40° und -70°, insbesondere zwischen -40° und -50°, insbesondere zwischen -42° und -48°, insbesondere etwa -45°, ist,
der zweite Zahnspitzwinkel (11) zwischen 0° und 15°, insbesondere zwischen 0° und 12°, insbesondere zwischen 0° und 10°, insbesondere zwischen 3° und 13°, insbesondere zwischen 5° und 15°, insbesondere zwischen 8° und 12°, insbesondere etwa 10°, ist.

3. Zerspanungswerkzeug (1) nach einem der vorhergehenden Ansprüche, **dadurch gekennzeichnet, dass** die Zahnspitze (4) weiterhin mit Pufferpartikeln (16) aus einem anderen Material als die Schneidpartikel (5) belegt ist und sich die Pufferpartikel (16) zwischen den Schneidpartikeln (5) befinden.

4. Zerspanungswerkzeug (1) nach Anspruch 3, **dadurch gekennzeichnet, dass** die Schneidpartikel (5) und die Pufferpartikel (16) in einer Metallschicht (17), insbesondere einer galvanischen Abscheidungsschicht oder einer chemischen Metallabscheidungsschicht, teilweise eingebettet sind.

5. Zerspanungswerkzeug (1) nach Anspruch 4, **dadurch gekennzeichnet, dass** die Metallschicht (17) aus Metall, insbesondere Nickel, Chrom oder Kupfer, besteht, das sich als Metallionen beim Galvanisieren oder der chemischen Metallabscheidung auf der Zahnspitze (4) abgelagert hat, und die Metallionen und das Metall der Metallschicht (17) nicht die Pufferpartikel (16) sind.

6. Zerspanungswerkzeug (1) nach mindestens einem der Ansprüche 3 bis 5, **dadurch gekennzeichnet, dass** der belegte Teil der Zahnspitze (4) zu zwischen etwa 10 und 60 %, insbesondere zwischen etwa 10 und 50 %, insbesondere zwischen etwa 20 und 50 %, insbesondere zwischen etwa 30 und 50 %, aus Pufferpartikeln (16) besteht.

7. Zerspanungswerkzeug (1) nach mindestens einem der Ansprüche 3 bis 6, **dadurch gekennzeichnet, dass** die Schneidpartikel (5) und die Pufferpartikel (16) in etwa die gleiche durchschnittliche Größe besitzen.

8. Zerspanungswerkzeug (1) nach mindestens einem der Ansprüche 3 bis 7, **dadurch gekennzeichnet, dass** die Pufferpartikel (16) eine geringere Härte als die Schneidpartikel (5) besitzen.

9. Zerspanungswerkzeug (1) nach mindestens einem der Ansprüche 3 bis 8, **dadurch gekennzeichnet, dass** die Pufferpartikel (16) eine geringere Hitzebeständigkeit als die Schneidpartikel (5) besitzen.

10. Zerspanungswerkzeug (1) nach mindestens einem der Ansprüche 3 bis 9, **dadurch gekennzeichnet, dass**
die Schneidpartikel (5) kubisches Bornitrid (CBN) und die Pufferpartikel (16) Diamant aufweisen, oder
die Schneidpartikel (5) Diamant, Siliciumcarbid, Schneidkeramik, Hartmetall oder Kombinationen daraus aufweisen und die Pufferpartikel (16) Kunststoff, Glas, Keramik, Borcarbid, Nickel, Kupfer oder Kombinationen aufweisen.

11. Zerspanungswerkzeug (1) nach mindestens einem der vorhergehenden Ansprüche, **dadurch gekennzeichnet, dass** eine Mehrzahl, insbesondere eine Vielzahl, derartiger Zähne (3) an dem Zerspanungswerkzeug (1) angeordnet ist.

12. Zerspanungswerkzeug (1) nach mindestens einem der vorhergehenden Ansprüche, **gekennzeichnet durch** einen Zahntragekörper (2), der bandförmig oder kreisscheibenförmig ausgebildet ist.

13. Zerspanungswerkzeug (1) nach Anspruch 3 und 4, **dadurch gekennzeichnet, dass** die Zähne (3) mit einer variablen Teilung an dem Zahntragekörper (2) angeordnet sind.

14. Verfahren zum Zerspanen von zwei Werkstücken aus unterschiedlichen Werkstoffen mit genau einem als Sägeband oder Sägeblatt ausgebildeten Zerspanungswerkzeug (1) Zerspanungswerkzeug (1) mit einem Zahn (3) mit einer asymmetrisch ausgebildeten Zahnspitze (4), die zur Bildung einer Mehrzahl geometrisch unbestimmter Schneiden mit Schneidpartikeln (5) beschichtet ist, insbesondere einem Zerspanungswerkzeug (1) nach mindestens einem der vorhergehenden Ansprüche, mit den folgenden Schritten:
Einsetzen des Zerspanungswerkzeugs (1) in einer ersten Orientierung in eine Zerspanungsmaschine mit einem Motor;
Zerspanen eines ersten Werkstücks aus einem ersten Werkstoff mit dem Zerspanungswerkzeug (1) in der ersten Orientierung durch Antreiben des Zerspanungswerkzeugs (1) in einem ersten Bewegungsrichtungssinn (13); und
a1. Umschalten des Motors zum Antreiben des Zerspanungswerkzeugs (1) in einem entgegensetzen zweiten Bewegungsrichtungssinn (14), und
a2. Zerspanen eines zweiten Werkstücks aus einem anderen zweiten Werkstoff mit dem Zerspanungswerkzeug (1) in der ersten Orientierung;
oder
b1. Entnehmen des Zerspanungswerkzeugs (1) aus der Zerspanungsmaschine,
b2. Einsetzen des Zerspanungswerkzeugs (1) in einer entgegengesetzten zweiten Orientierung in die Zerspanungsmaschine, und
b3. Zerspanen eines zweiten Werkstücks aus einem anderen zweiten Werkstoff mit dem Zerspanungswerkzeug (1) in der zweiten Orientierung durch Antreiben des Zerspanungswerkzeugs (1) in dem ersten Bewegungsrichtungssinn (13).

## Claims

1. A machining tool (1) embodied as a saw band or saw blade, the machining tool (1) including a tooth (3) having a tooth tip (4) being covered with cutting particles (5) to form a plurality of geometrically undefined cutting portions, wherein
the tooth tip (4) includes a longitudinal center axis (6), a plateau surface (7), a first connecting surface (8) and a second connecting surface (9), wherein
the first connecting surface (8) and the second connecting surface (9) are directly or indirectly connected to the plateau surface (7), and
the first connecting surface (8) extends at a first side of the longitudinal center axis (6) under a first tooth tip angle (10) having a first value with respect to the plateau surface (7), and
the tooth tip (4) is designed to be asymmetrical,
the second connecting surface (9) extends at an opposite second side of the longitudinal center axis (6) under a second tooth tip angle (11) having a different second value with respect to the plateau surface (7),
the first tooth tip angle (10) is < 0° as seen in a first sense of direction of movement (13) in which the first connecting surface (8) precedes the second connecting surface (9), and
the second tooth tip angle (11) is ≥ 0° in an opposite second sense of direction of movement (14) in which the second connecting surface (9) precedes the first connecting surface (8)
**characterized in that**
when the machining tool (1) moves in a first sense of direction of movement (13) the first connecting surface (8) is the active machining surface which first comes into contact with the workpiece which is to be machined, and when the machining tool (1) moves in the opposite second sense of direction of movement (14) the second connecting surface (9) is the active machining surface, and
the first tooth tip angle (10) is between < 0° and -80° and the second tooth tip angle (11) is between 0° and 20°.

2. The machining tool (1) of claim 1, **characterized in that**
the first tooth tip angle (10) is between -1° and -75°, especially between -1° and -73°, especially between -1° and -71°, especially between -40° and -80°, especially between -40° and -75°, especially between -40° and -70°, especially between -40° and -50°, especially between -42° and -48°, especially approximately -45°,
the second tooth tip angle (11) is between 0° and 15°, especially between 0° and 12°, especially between 0° and 10°, especially between 3° and 13°, especially between 5° and 15°, especially between 8° and 12°, especially approximately 10°.

3. The machining tool (1) of one of the preceding claims, **characterized in that** the tooth tip (4) is furthermore covered with buffer particles (16) of a different material than the cutting particles (5) and the buffer particles (16) are located between the cutting particles (5).

4. The machining tool (1) of claim 3, **characterized in that** the cutting particles (5) and the buffer particles (16) are partly embedded in a metal layer (17), especially a galvanic deposition layer or a chemical deposition layer.

5. The machining tool (1) of claim 4, **characterized in that** the metal layer (17) consists of metal, especially nickel, chrome or copper, that has deposited on the tooth tip (4) as metal ions during galvanization or chemical metal deposition and that the metal ions and the metal of the metal layer (17) are not the buffer particles (16).

6. The machining tool (1) of at least one of claims 3 to 5, **characterized in that** the covered part of the tooth tip (4) consists of between approximately 10 and 60%, especially between approximately 10 and 50 %, especially between approximately 20 and 50 %, especially between approximately 30 and 50 %, of buffer particles (16).

7. The machining tool (1) of at least one of claims 3 to 6, **characterized in that** the cutting particles (5) and the buffer particles (16) have approximately the same average size.

8. The machining tool (1) of at least one of claims 3 to 7, **characterized in that** the buffer particles (16) have a lower hardness than the cutting particles (5).

9. The machining tool (1) of at least one of claims 3 to 8, **characterized in that** the buffer particles (16) have a lower heat resistance than the cutting particles (5).

10. The machining tool (1) of at least one of claims 3 to 9, **characterized in that**
the cutting particles (5) include cubic bornitride (CBN) and the buffer particles (16) include diamond, or
the cutting particles (5) include diamond, silicon carbide, cutting ceramics, hard metal or combinations thereof and the buffer particles (16) include plastic, glass, ceramics, boron carbide, nickel, copper or combinations thereof.

11. The machining tool (1) of at least one of the preceding claims, **characterized in that** a plurality, especially a multitude, of such teeth (3) is arranged at the machining tool (1).

12. The machining tool (1) of at least one of the preceding claims, **characterized by** a tooth supporting body (2) being designed to be band-shaped or to have the shape of a circular disk.

13. The machining tool (1) of claim 3 and 4, **characterized in that** the teeth (3) are arranged at the tooth supporting body (2) with a variable division.

14. A method of machining two workpieces of different materials with exactly one machining tool (1) being embodied as a saw band or saw blade, the machining tool (1) including a tooth (3) having an asymmetrical tooth tip (4) being covered with cutting particles (5) to form a plurality of geometrically undefined cutting portions, especially a machining tool (1) of at least one of the preceding claims, comprising the steps of:
inserting the machining tool (1) in a first orientation into a machining apparatus including a motor;
machining a first workpiece of a first material with the machining tool (1) in the first orientation by driving the machining tool (1) in a first sense of direction of movement (13); and
a1. switching the motor to drive the machining tool (1) in an opposite second sense of direction of movement (14), and
a2. machining a second workpiece of a different second material with the machining tool (1) in the first orientation;
or
b1. removing the machining tool (1) from the machining apparatus,
b2. inserting the machining tool (1) in an opposite second orientation in the machining apparatus, and
b3. machining a second workpiece of a different second material with the machining tool (1) in the second orientation by driving the machining tool (1) in the first sense of direction of movement (13).

## Revendications

1. Outil de coupe (1) conçu sous forme de ruban de scie ou de lame de scie comportant une dent (3) avec une pointe de dent (4), qui est recouverte de particules coupantes (5) pour former une pluralité d'arêtes géométriquement indéterminées,
la pointe de dent (4) présentant un axe central longitudinal (6), une surface de plateau (7), une première surface de jonction (8) et une deuxième surface de jonction (9),
la première surface de jonction (8) et la deuxième surface de jonction (9) se raccordant directement ou indirectement à la surface du plateau (7), et
la première surface de jonction (8) s'étendant sur un premier côté de l'axe central longitudinal (6) selon un premier angle de pointe de dent (10) d'une première amplitude par rapport à la surface de plateau (7), et la pointe de dent (4) étant conçue de manière asymétrique,
la deuxième surface de jonction (9) s'étendant sur un deuxième côté opposé de l'axe central longitudinal (6) selon un deuxième angle de pointe de dent (11) d'une deuxième amplitude différente par rapport à la surface de plateau (7),
le premier angle de pointe de dent (10), vu dans un premier sens de déplacement (13) dans lequel la première surface de jonction (8) précède la deuxième surface de jonction (9), étant < à 0°, et
le deuxième angle de pointe de dent (11), vu dans un sens de déplacement (14) opposé dans lequel la deuxième surface de jonction (9) précède la première surface de jonction (8), étant ≥ à 0°,
**caractérisé en ce que**, lorsque l'outil de coupe (1) se déplace dans un premier sens de déplacement (13), la première surface de jonction (8) est la surface de coupe active qui entre en premier en contact avec la pièce à usiner, et lorsque l'outil de coupe (1) se déplace dans le sens de déplacement (14) opposé, la deuxième surface de jonction (9) est la surface de coupe active, et
le premier angle de pointe de dent (10) est compris entre < 0° et -80° et le deuxième angle de pointe de dent (11) est compris entre 0° et 20°.

2. Outil de coupe (1) selon la revendication 1, **caractérisé en ce que**
le premier angle de pointe de dent (10) est compris entre -1° et -75°, en particulier entre -1° et -73°, en particulier entre -1° et -71°, en particulier entre -40° et -80°, en particulier entre -40° et -75°, en particulier entre -40° et -70°, en particulier entre -40° et -50°, en particulier entre -42° et -48°, et atteint en particulier environ -45° ,
le deuxième angle de pointe de dent (11) est compris entre 0° et 15°, en particulier entre 0° et 12°, en particulier entre 0° et 10°, en particulier entre 3° et 13°, en particulier entre 5° et 15°, en particulier entre 8° et 12°, et atteint en particulier environ 10°.

3. Outil de coupe (1) selon l'une des revendications précédentes, **caractérisé en ce que** la pointe de dent (4) est en outre recouverte de particules-tampon (16) constituées d'un matériau différent de celui des particules coupantes (5) et des particules-tampon (16) se trouvent entre les particules coupantes (5).

4. Outil de coupe (1) selon la revendication 3, **caractérisé en ce que** les particules coupantes (5) et les particules-tampon (16) sont partiellement intégrées dans une couche métallique (17), en particulier une couche de dépôt galvanique ou une couche de dépôt métallique chimique.

5. Outil de coupe (1) selon la revendication 4, **caractérisé en ce que** la couche métallique (17) est constituée de métal, en particulier de nickel, de chrome ou de cuivre, qui a été déposé sous forme d'ions métalliques sur la pointe de dent (4) dans le cadre d'une galvanisation ou d'un dépôt chimique de métaux, et les ions métalliques et le métal de la couche métallique (17) ne sont pas les particules-tampon (16).

6. Outil de coupe (1) selon au moins l'une des revendications 3 à 5, **caractérisé en ce que** la partie couverte de la pointe de dent (4) est constituée à hauteur d'environ 10 à 60 %, en particulier à hauteur d'environ 10 à 50 %, en particulier à hauteur d'environ 20 à 50 %, en particulier à hauteur d'environ 30 à 50 % de particules-tampon (16).

7. Outil de coupe (1) selon au moins l'une des revendications 3 à 6, **caractérisé en ce que** les particules de coupe (5) et les particules-tampon (16) ont approximativement la même taille moyenne.

8. Outil de coupe (1) selon au moins l'une des revendications 3 à 7, **caractérisé en ce que** les particules-tampon (16) ont une dureté inférieure à celle des particules de coupe (5).

9. Outil de coupe (1) selon au moins l'une des revendications 3 à 8, **caractérisé en ce que** les particules-tampon (16) présentent une résistance thermique inférieure à celle des particules de coupe (5).

10. Outil de coupe (1) selon au moins l'une des revendications 3 à 9, **caractérisé en ce que**
les particules coupantes (5) contiennent du nitrure de bore cubique (CBN) et les particules-tampon (16) contiennent du diamant, ou
les particules coupantes (5) sont constituées de diamant, de carbure de silicium, de céramique coupante, de métal dur ou de combinaisons de ceux-ci et les particules-tampon (16) sont constituées de plastique, de verre, de céramique, de carbure de bore, de nickel, de cuivre ou de combinaisons de ceux-ci.

11. Outil de coupe (1) selon au moins l'une des revendications précédentes, **caractérisé en ce que** plusieurs, en particulier une pluralité, de telles dents (3) sont agencées sur l'outil de coupe (1).

12. Outil de coupe (1) selon au moins l'une des revendications précédentes, **caractérisé par** un corps de support de dents (2) qui est conçu sous la forme d'une bande ou d'un disque circulaire.

13. Outil de coupe (1) selon les revendications 3 et 4, **caractérisé en ce que** les dents (3) sont agencées sur le corps de support de dents (2) à pas variable.

14. Procédé pour couper deux pièces à usiner constituées de matériaux différents avec exactement un outil de coupe (1) conçu comme un ruban de scie ou une lame de scie, outil de coupe (1) comportant une dent (3) avec une pointe de dent asymétrique (4) revêtue de particules de coupe (5) pour former plusieurs arêtes géométriquement indéterminées, en particulier un outil de coupe (1) selon au moins l'une des revendications précédentes, avec les étapes suivantes :
Insérer l'outil de coupe (1) dans une première orientation dans une machine de coupe dotée d'un moteur ;
Couper une première pièce à usiner constituée d'un premier matériau avec l'outil de coupe (1) dans la première orientation en entraînant l'outil de coupe (1) dans un premier sens de déplacement (13) ; et
a1. Commuter le moteur de manière à entraîner l'outil de coupe (1) dans un deuxième sens de déplacement opposé (14), et
a2. Couper une deuxième pièce à usiner constituée d'un autre deuxième matériau avec l'outil de coupe (1) dans la première orientation ;
ou
b1. Retirer l'outil de coupe (1) de la machine de coupe,
b2. Insérer l'outil de coupe (1) dans la deuxième orientation opposée dans la machine de coupe, et
b3. Couper une deuxième pièce constituée d'un autre deuxième matériau avec l'outil de coupe (1) dans la deuxième orientation en entraînant l'outil de coupe (1) dans le premier sens de déplacement (13).
